# EUROPÄISCHE PATENTSCHRIFT

(11) **EP 1 243 837 B1**
(45) Veröffentlichungstag und Bekanntmachung des Hinweises auf die Patenterteilung: **13.06.2007**
(21) Anmeldenummer: 02001433.8
(22) Anmeldetag: 21.01.2002
(51) Int. Cl.: F16L 33/02, F16L 33/035

(54) **SMC-Schelle**
Hose clamp
Collier de serrage pour tuyau flexible

(30) Priorität: 26.02.2001 DE 20102900 U
(43) Veröffentlichungstag der Anmeldung: 25.09.2002
(73) Patentinhaber: ABA of Sweden AB, 111 60 Stockholm (SE)
(72) Erfinder: Bange, Winfried Dipl.-Ing., 59929 Brilon-Alme (DE)
(74) Vertreter: Sperling, Rüdiger

(56) Entgegenhaltungen:
- EP-A- 0 697 554
- DE-C- 4 237 330
- US-A- 4 517 708
- US-A- 4 622 720

## Beschreibung

Die Erfindung betrifft eine Schelle, insbesondere zur Befestigung eines Schlauchs, gemäß dem Oberbegriff des Anspruchs 1. Eine derartige Schelle ist aus US 4 517 708 bekannt.

Aus DE 4237330 C1 ist eine weitere Schelle bekannt, die ein im montierten Zustand ringförmig gebogenes Schellenband aufweist, wobei die beiden Enden des Schellenbandes im montierten Zustand radial übereinander liegen, in Umfangsrichtung überlappen und durch ein Verriegelungselement miteinander verbunden werden, um die Schelle zu spannen. Als Verriegelungselement dient hierbei zum einen ein Haken, der in dem radial innen liegenden Ende des Schellenbandes ausgestanzt ist und radial nach außen hervorsteht. Dieser Haken greift im montierten Zustand der Schelle in eine Hinterschneidung in dem radial außen liegenden Ende des Schellenbandes ein, wodurch die beiden Enden des Schellenbandes miteinander verbunden werden. Die Hinterschneidung in dem radial außen liegenen Ende des Schellenbandes besteht hierbei aus einer einfachen Biegung des Schellenbandes nach innen.

Nachteilig an den vorstehend beschriebenen bekannten Schellen ist die relative Unzuverlässigkeit der Verriegelungselemente. So kann sich die Verbindung zwischen den beiden Enden des Schellenbandes beispielsweise bei Vibrationen lösen.

Der Erfindung liegt deshalb die Aufgabe zugrunde, die eingangs beschriebene bekannte Schelle dahingehend zu verbessern, dass die Verriegelung der beiden Enden des Schellenbandes zuverlässiger und insbesondere unempfindlich gegenüber Vibrationen ist.

Die Aufgabe wird, ausgehend von der eingangs beschriebenen bekannten Schelle gemäß dem Oberbegriff des Anspruchs 1, durch die kennzeichnenden Merkmale des Anspruchs 1 gelöst.

Die Erfindung umfaßt die allgemeine technische Lehre, in dem radial außen liegenden Ende des Schellenbandes als Verriegelungselement eine Öse mit einer geschlossenen Umfangskontur zu verwenden, in die der Haken in dem radial innen liegenden Ende des Schellenbandes eingreift. Vorzugsweise ist die Öse in dem radial außen liegenden Ende des Schellenbandes ausgestanzt und vorzugsweise nierenförmig.

In der bevorzugten Ausführungsform der erfindungsgemäßen Schelle ist das radial außen liegende Ende des Schellenbandes im Bereich der Öse über die Kontur des Spannquerschnitts hinaus nach innen gebogen, damit das radial außen liegende Ende des Schellenbandes bei der Montage federnd auf dem radial innen liegenden Ende des Schellenbandes aufliegt. Bei der Montage der Schelle weist das radial außen liegende Ende des Schellenbandes hierbei also eine Vorspannung auf, wodurch sichergestellt wird, dass das radial außen liegende Ende stets federnd auf dem radial innen liegenden Ende des Schellenbandes aufliegt. Dies ist besonders vorteilhaft, da auf diese Weise sichergestellt wird, dass der Haken bei der Montage tatsächlich in die Öse hineingleitet. Besonders vorteilhaft ist es hierbei, wenn das freie Ende des radial außen liegenden Ende des Schellenbandes kufenförmig gebogen ist, um bei der Montage auf dem radial innen liegenden Ende des Schellenbandes zu gleiten.

Weiterhin ist erfindungsgemäß vorgesehen, dass das radial außen liegende Ende des Schellenbandes ein Dehnelement in Form einer Auswölbung aufweist, wobei die Öse in der dem Ende des Schellenbandes zugewandten Flanke der Auswölbung angeordnet ist, während in der bevorzugten Ausführungsform die dem Ende des Schellenbandes abgewandte Flanke der Auswölbung steiler ist und einen Eingriff für eine Montagezange bildet. Die Auswölbung in dem radial außen liegenden Ende des Schellenbandes vereint hierbei also drei technische Funktionen. Zum einen dient die Öse in der einen Flanke der Auswölbung als Verriegelungselement für den Haken in dem radial innen liegenden Ende des Schellenbandes. Zum anderen dient die dem Ende des Schellenbandes abgewandte Flanke der Auswölbung als Eingriff für eine Montagezange, welche die beiden Enden des Schellenbandes in Umfangsrichtung zusammenpreßt, um das Einführen des Hakens in die Öse zu ermöglichen. Darüber hinaus dient die Auswölbung noch als Dehnelement, das im montierten Zustand eine gewünschte Spannung in Umfangsrichtung erzeugt.

In einer Variante der Erfindung weist das radial außen liegende Ende des Schellenbandes eine nach außen gerichtete Stufenprägung auf, die an der Innenseite des Schellenbandes eine Ausnehmung bildet, wobei die Tiefe der Ausnehmung gleich der Dicke des Schellenbandes im Bereich des radial innen liegenden Endes ist, während die Form der Ausnehmung an die Form des radial innen liegenden Endes des Schellenbandes angepaßt ist. Das radial innen liegende Ende des Schellenbandes wird hierbei also im montierten Zustand von der Ausnehmung in der Stufenprägung aufgenommen, so dass die Innenkontur des Schellenbandes vorzugsweise absatzfrei ist, wodurch Leckageverluste vermieden werden und die Radialkraftverteilung verbessert wird. Besonders vorteilhaft ist diese Variante der Erfindung, wenn das radial innen liegende Ende des Schellenbandes und die Ausnehmung in dem radial außen liegenden Ende des Schellenbandes zungenförmig auslaufen.

In der bevorzugten Ausführungsform dieser Variante ist an der Innenseite der Stufenprägung zusätzlich eine in Umfangsrichtung verlaufende Führungsnut angeformt, in die eine an der Außenseite des radial innen liegenden Endes des Schellenbandes angeformte, entsprechend formangepaßte, nach außen hervorstehende und ebenfalls in Umfangsrichtung verlaufenden Führungsfeder eingreift, so dass durch das Ineinandergreifen von Führungsnut und Führungsfeder eine seitliche Führung der beiden Enden des Schellenbandes relativ zueinander bewirkt wird.

Ferner ist in einer Variante der Erfindung vorgesehen, dass an mindestens einem Ende des Schellenbandes mindestens eine in Umfangsrichtung verlaufende Versteifungssicke angeformt ist, wobei die Versteifungssicke vorzugsweise in dem radial innen liegenden Ende des Schellenbandes angeformt ist, da dieses Ende bei der Montage der Schelle mittels einer Montagezange auf Stauchung beansprucht wird, so dass die Versteifungssicke eine Stauchung bzw. Biegung des radial innen liegenden Endes des Schellenbandes während der Montage verhindert. Vorzugsweise ist die Versteifungssicke auf der Innenseite des Schellenbandes angeformt, jedoch kann die Versteifungssicke auch auf der Außenseite des Schellenbandes angeformt sein. Beispielsweise kann eine derartige Versteifungssicke in herkömmlicher Weise in das Schellenband eingeprägt sein.

In der bevorzugten Ausführungsform weist das radial außen liegende Ende des Schellenbandes als Dehnelemente zwei Auswölbungen auf, wobei das Schellenband zwischen den beiden Auswölbungen einen Schlitz aufweist, der mittig angeordnet ist und in Umfangsrichtung verläuft. Der Schlitz ermöglicht ein Durchführen der Führungssicke bzw. -feder während der Montage und ist deshalb vorzugsweise mindestens genauso breit wie die Führungssicke bzw. -feder.

Andere vorteilhafte Weiterbildungen der Erfindung sind in den Unteransprüchen gekennzeichnet bzw. werden nachstehend zusammen mit der Beschreibung des bevorzugten Ausführungsbeispiels der Erfindung näher erläutert. Es zeigen:
- Fig.1: eine Seitenansicht des Schellenbandes vor der Montage,
- Fig.2: eine Aufsichtsdarstellung des Schellenbandes vor der Montage,
- Fig.3: eine Seitenansicht der Schelle im montierten Zustand sowie
- Fig.4: eine Seitenansicht der Schelle während der Montage mit einer angesetzten Montagezange.

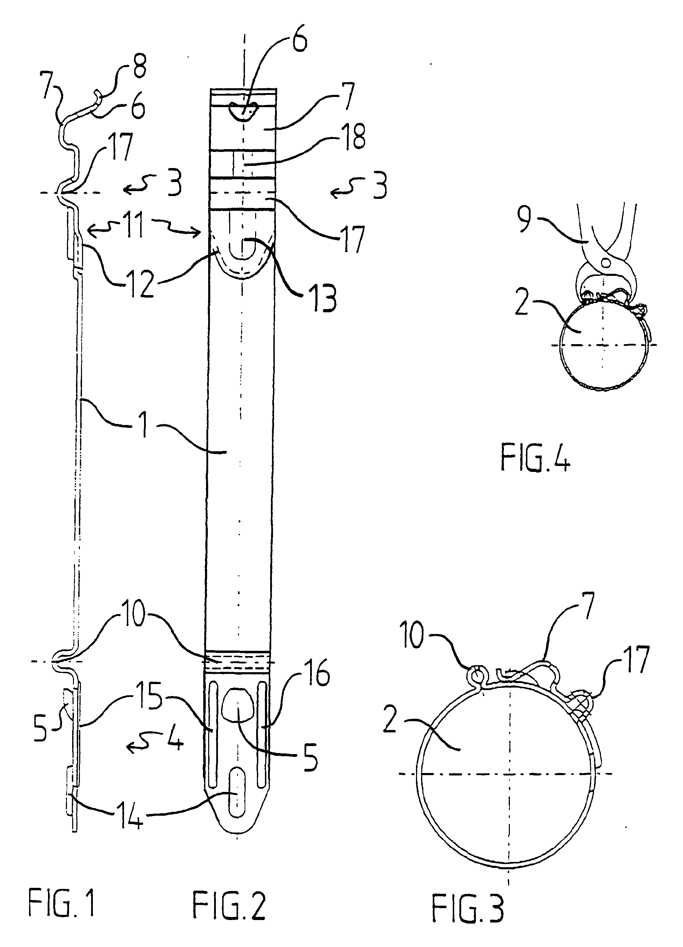

Die in den Figuren 1 bis 4 als bevorzugtes Ausführungsbeispiel der Erfindung dargestellte Schelle besteht im wesentlichen aus einem Schellenband 1 aus Federstahl, das im montierten Zustand einen Spannquerschnitt 2 umschließt, der beispielsweise von einem Schlauch ausgefüllt wird.

Das Schellenband weist zwei Enden 3, 4 auf, die im montierten Zustand radial übereinander liegen und einander in Umfangsrichtung überlappen, wie insbesondere aus Figur 3 ersichtlich ist.

An der Außenseite des radial innen liegenden Endes 4 des Schellenbandes 1 ist ein Haken 5 ausgestanzt, der radial nach außen hervorsteht und im montierten Zustand der Schelle in eine in dem radial außen liegenden Ende 3 des Schellenbandes 1 angeordnete nierenförmige Öse 6 eingreift, wodurch die beiden Enden 3, 4 des Schellenbandes 1 im montierten Zustand miteinander verbunden werden. Die Öse 6 ist aus dem Schellenband 1 ausgestanzt, wobei sich die Öse 6 in Umfangsrichtung zum Mittelabschnitt des Schellenbandes 1 hin verjüngt, wodurch ein sicherer Sitz des Hakens 5 in der Öse 6 gewährleistet wird.

In dem Ende 3 des Schellenbandes 1 ist weiterhin ein Dehnelement 7 in Form einer Auswölbung angeordnet, das der Schelle im montierten Zustand die gewünschte Spannung in Umfangsrichtung verleiht. Darüber hinaus dient das Dehnelement 7 zur Aufnahme der Öse 6, die in der dem freien Ende des Schellenbandes 1 zugewandten Flanke des Dehnelementes 7 angeordnet ist. Vorteilhaft ist hierbei, dass die dem freien Ende des Schellenbandes 1 zugewandte Flanke des Dehnelementes 7 über die Kontur des Spannquerschnitts 2 hinaus nach innen gebogen ist, damit das radial außen liegende Ende 3 des Schellenbandes 1 bei der Montage federnd auf dem radial innen liegenden Ende 4 des Schellenbandes 1 aufliegt, wie insbesondere aus Figur 3 ersichtlich ist. An seinem Abschluß ist das Ende 3 des Schellenbandes 1 in Form einer Kufe 8 geformt, um bei der Montage auf dem radial innen liegenden Ende 4 des Schellenbandes 1 zu gleiten.

Darüber hinaus dient das Dehnelement 7 auch als Eingriff für eine Montagezange 9, wie insbesondere aus Figur 4 ersichtlich ist. Die dem freien Ende des Schellenbandes 1 abgewandte Flanke des Dehnelementes 7 ist deshalb wesentlich steiler als die dem freien Ende des Schellenbandes 1 zugewandte Flanke des Dehnelements und weist vorzugsweise eine Abwinkelung gegenüber dem tangentialen Verlauf des Schellenbandes 1 von ungefähr 90° auf. Hierdurch wird verhindert, dass die Montagezange 9 von dem Dehnelement 7 abrutscht. Der andere Ansatzpunkt für die Montagezange 9 wird durch ein weiteres Dehnelement 10 in Form einer Auswölbung gebildet, die auf der Außenseite des radial innen liegenden Endes 4 des Schellenbandes 1 angeordnet ist. Durch die Montagezange 9 können die beiden Enden 3, 4 des Schellenbandes 1 also zusammengezogen werden, bis der Haken 5 in die Öse 6 eingreift und die beiden Enden 3, 4 des Schellenbandes 1 miteinander verriegelt.

Weiterhin weist das Schellenband im Bereich des Endes 3 eine nach außen gerichtete Stufenprägung 11 auf, die an der Innenseite des Schellenbandes 1 eine Ausnehmung 12 bildet, wobei die Tiefe der Ausnehmung 12 im wesentlichen gleich der Dicke des Schellenbandes 1 im Bereich des radial innen liegenden Endes 4 ist. Weiterhin ist die Form der Ausnehmung 12 an die Form des radial innen liegenden Endes 4 des Schellenbandes 1 angepaßt, das zungenförmig ausläuft, wie aus Figur 2 ersichtlich ist. Im montierten Zustand der Schelle liegt das zungenförmig auslaufende Ende 4 des Schellenbandes 1 also in der Ausnehmung 12, so dass die beiden Enden 3, 4 des Schellenbandes 1 bündig und ansatzlos ineinander übergehen, wie insbesondere aus Figur 3 ersichtlich ist. Hierdurch werden Leckageverluste an der Stoßstelle vermieden.

Weiterhin weist die Stufenprägung 11 eine in Umfangsrichtung verlaufende Führungsnut 13 auf, in die eine an der Außenseite des radial innen liegenden Endes 4 des Schellenbandes 1 angeformte, entsprechend formangepaßte, nach außen hervorstehende und ebenfalls in Umfangsrichtung verlaufende Führungsfeder 14 eingreift, die in das radial innen liegende Ende 4 des Schellenbandes 1 eingeprägt ist. Durch das Ineinandergreifen der Führungsnut 13 und der Führungsfeder 14 wird vorteilhaft eine seitliche Führung der beiden Enden 3, 4 des Schellenbandes relativ zueinander erreicht.

Ferner sind an dem radial innen liegenden Ende 4 des Schellenbandes 1 auf der Innenseite zwei in Umfangsrichtung verlaufende Versteifungssicken 15, 16 angeformt, die bei der Montage der Schelle mittels der Montagezange 9 verhindern, dass sich das Ende 4 des Schellenbandes zusammenstaucht oder auswölbt. Dies ist wichtig, da das Ende 4 des Schellenbandes bei der Montage durch die Montagezange 9 entsprechend belastet wird.

Schließlich weist das Schellenband noch ein weiteres Dehnelement 17 auf, das in dem radial außen liegenden Ende 3 des Schellenbandes 1 zu dem Dehnelement 7 benachbart angeordnet ist. Das Dehnelement 17 besteht ebenfalls aus einer Auswölbung des Schellenbandes 1 nach außen. Zwischen den beiden Dehnelementen 7, 17 ist in dem Schellenband ein in Umfangsrichtung verlaufender und mittig angeordneter Schlitz 18 angeordnet, der bei der Montage der Schelle das radial außenliegende Ende 3 des Schellenbandes 1 auf der Führungsfeder 14 des radial innenliegenden Endes 4 mittig führt und somit ein seitliches Ausgleiten der Enden 3, 4 des Schellenbandes 1 verhindert.

Die Erfindung ist nicht auf das vorstehend beschriebene bevorzugte Ausführungsbeispiel beschränkt. Vielmehr ist eine Vielzahl von Varianten und Abwandlungen denkbar, die von dem Erfindungsgedanken Gebrauch machen, solange sie in den Schutzbereich der Ansprüche fallen.

## Patentansprüche

1. Schelle, insbesondere zur Befestigung eines Schlauchs,
- mit einem Schellenband (1), das im montierten Zustand ringförmig gebogen ist und einen Spannquerschnitt (2) umschließt,
- wobei das Schellenband (1) zwei Endabschnitte (3, 4) aufweist, die im montierten Zustand radial übereinander liegen und einander in Umfangsrichtung überlappen, sowie mit
- einem an der Außenseite des radial innen liegenden Endabschnittes (4) des Schellenbandes (1) angeordneten und nach außen hervorstehenden Haken (5) und
- einer an dem radial außen liegenden Endabschnitt ausgebildeten Öse (6), und wobei
- der radial außen liegende Endabschnitt (3) des Schellenbandes (1) ein Dehnelement (7) aufweist,
- **dadurch gekennzeichnet, daß**
- das Dehnelement (7) die Form einer Auswölbung aufweist und die Öse (6), in die der Haken (5) eingehängt werden kann, um die beiden Endabschnitte (3, 4) des Schellenbandes (1) miteinander zu verbinden, in der dem Ende des Schellenbandes (1) zugewandten Flanke der Auswölbung angeordnet ist.

2. Schelle nach Anspruch 1, **dadurch gekennzeichnet, daß** die Öse (6) aus dem radial außen liegenden Endabschnitt (3) des Schellenbandes (1) ausgestanzt ist.

3. Schelle nach Anspruch 1 oder 2, **dadurch gekennzeichnet, daß** die Öse (6) im wesentlichen nierenförmig ist.

4. Schelle nach mindestens einem der vorhergehenden Ansprüche, **dadurch gekennzeichnet, daß** der radial außenliegende Endabschnitt (3) des Schellenbandes (1) im Bereich der Öse (6) über die Kontur des Spannquerschnitts (2) hinaus nach innen gebogen ist, damit der radial außen liegende Endabschnitt (3) des Schellenbandes (1) bei der Montage federnd auf dem radial innen liegenden Endabschnitt (4) des Schellenbandes (1) aufliegt.

5. Schelle nach Anspruch 4, **dadurch gekennzeichnet, daß** der radial außenliegende Endabschnitt (3) des Schellenbandes (1) kufenförmig gebogen ist, um bei der Montage auf dem radial innen liegenden Endabschnitt (4) des Schellenbandes (1) zu gleiten.

6. schelle nach mindestens einem der vorhergehenden Ansprüche, **dadurch gekennzeichnet, daß** die dem Ende des Schellenbandes abgewandte Flanke der Auswölbung steiler als die dem Ende des Schellenbandes abgewandte Flanke der Auswölbung ist und einen Eingriff für eine Montagezange (9) bildet.

7. Schelle nach mindestens einem der vorhergehenden Ansprüche, **dadurch gekennzeichnet,**
**daß** der radial außen liegende Endabschnitt (3) des Schellenbandes (1) eine nach außen gerichtete Stufenprägung (11) aufweist, die an der Innenseite des Schellenbandes (1) eine Ausnehmung (12) bildet,
wobei die Tiefe der Ausnehmung (12) gleich der Dicke des Schellenbandes (1) im Bereich des radial innen liegenden Endabschnittes (4) ist,
während die Form der Ausnehmung (12) an die Form des radial innen liegenden Endabschnittes (4) des Schellenbandes (1) angepaßt ist.

8. Schelle nach Anspruch 7, **dadurch gekennzeichnet, daß** die beiden Endabschnitte (3, 4) des Schellenbandes (1) im montierten Zustand bündig ineinander übergehen.

9. Schelle nach Anspruch 7 oder 8, **dadurch gekennzeichnet, daß** der radial innen liegende Endabschnitt (4) des Schellenbandes (1) und die Ausnehmung (12) in dem radial außen liegenden Endabschnitt (3) des Schellenbandes (1) zungenförmig auslaufen.

10. Schelle nach mindestens einem Anspruch 7 bis 9, **dadurch gekennzeichnet, daß** an der Innenseite der Stufenprägung (11) zusätzlich eine in Umfangsrichtung verlaufende Führungnut (13) oder Führungssicke angeformt ist, in die eine an der Außenseite des radial innen liegenden Endabschnittes (4) des Schellenbandes (1) angeformte, entsprechend formangepaßte, nach außen hervorstehende und ebenfalls in Umfangsrichtung verlaufende Führungsfeder (14) eingreift.

11. Schelle nach mindestens einem der vorhergehenden Ansprüche, **dadurch gekennzeichnet, daß** an mindestens einem Endabschnitt des Schellenbandes (1) mindestens eine in Umfangsrichtung verlaufende Versteifungssicke (15, 16) angeformt ist.

12. Schelle nach Anspruch 11, **dadurch gekennzeichnet, daß** an mindestens einem Endabschnitt des Schellenbandes (1) mindestens zwei in Umfangsrichtung und parallel zueinander verlaufende Versteifungssicken (15, 16) angeformt sind.

13. Schelle nach Anspruch 11 oder 12, **dadurch gekennzeichnet, daß** die Versteifungssicke (15, 16) auf der Innenseite des Schellenbandes (1) angeformt ist.

14. Schelle nach mindestens einem der Ansprüche 11 bis 13, **dadurch gekennzeichnet, daß** die Versteifungssicke (15, 16) in das Schellenband (1) eingeprägt ist.

15. Schelle nach mindestens einem der vorhergehenden Ansprüche, **dadurch gekennzeichnet, daß** der radial außen liegende Endabschnitt (3) des Schellenbandes (1) als Dehnelemente (7, 17) zwei Auswölbungen aufweist, wobei das Schellenband (1) zwischen den beiden Auswölbungen einen Schlitz (18) aufweist, der mittig angeordnet ist und in Umfangsrichtung verläuft.

16. Schelle nach Anspruch 15, **dadurch gekennzeichnet, daß** die Breite des Schlitzes (18) mindestens so groß ist wie die Breite der Führungsfeder, der Führungssicke (14) oder des Hakens (5).

17. Schelle nach mindestens einem der vorhergehenden Ansprüche, **dadurch gekennzeichnet, daß** an mindestens einem Endabschnitt des Schellenbandes (1) auf der Außenseite in Umfangsrichtung zueinander der Eingriff für eine Montagezange (9) angebracht ist.

## Claims

1. A clamp, in particular for attaching a hose,
- having a clamp band (1) which in the mounted state is bent in annular shape and encloses a clamping cross section (2),
- the clamp band (1) having two terminal portions (3, 4) which in the mounted state are radially lying one upon another and overlap each other in circumferential direction, and comprising
- an outwardly projecting hook (5) arranged on the outside of the radially inner terminal portion (4) of the clamp band (1) and
- an eye (6) formed in the radially outer terminal portion, and wherein
- the radially outer terminal portion (3) of the clamp band (1) comprises an extension element (7),
- **characterized in that**
- the extension element (7) has a bulging shape, and that the eye (6) for securing the hook (5) to connect the two terminal portions (3, 4) of the clamp band (1) to each other is arranged in the flank of the bulging facing towards the end of the clamp band (1).

2. A clamp as claimed in claim 1, **characterized in that** the eye (6) is punched from the radially outer terminal portion (3) of the clamp band (1).

3. A clamp as claimed in claim 1 or 2, **characterized in that** the eye (6) is substantially reniform.

4. A clamp as claimed in at least one of the preceding claims, **characterized in that** the radially outer terminal portion (3) of the clamp band (1) is bent inward beyond the contour of the clamping cross section (2) in the area of the eye (6) so that the radially outer terminal portion (3) of the clamp band (1) lies resiliently on the radially inner terminal portion (4) of the clamp band (1) during mounting.

5. A clamp as claimed in claim 4, **characterized in that** the radially outer terminal portion (3) of the clamp band (1) is bent in a skid shape for sliding on the radially inner terminal portion (4) of the clamp band (1) during mounting.

6. A clamp as claimed in at least one of the preceding claims, **characterized in that** the flank of the bulging facing away from the end of the clamp band is steeper than the flank of the bulging facing towards the end of the clamp band, the former flank forming an engagement portion for mounting pliers (9).

7. A clamp as claimed in at least one of the preceding claims, **characterized in that**
the radially outer terminal portion (3) of the clamp band (1) is provided with an outwardly directed embossed step (11) forming a recess (12) on the inside of the clamp band (1),
the depth of the recess (12) being equal to the thickness of the clamp band (1) in the area of the radially inner terminal portion (4),
while the shape of the recess (12) is adapted to the shape of the radially inner terminal portion (4) of the clamp band (1).

8. A clamp as claimed in claim 7, **characterized in that** both terminal portions (3, 4) of the clamp band (1) make a flush transition in their assembled state.

9. A clamp as claimed in claim 7 or 8, **characterized in that** the radially inner terminal portion (4) of the clamp band (1) and the recess (12) in the radially outer terminal portion (3) of the clamp band (1) taper off in a tongue shape.

10. A clamp as claimed in at least one of claims 7 to 9, **characterized in that** on the inside of the embossed step (11) there is additionally formed a guiding groove or guiding bead into which an outwardly projecting guiding tongue (14) engages which is formed on the outside of the radially inner terminal portion (4) of the clamp band (1) in a correspondingly matching shape and extending in circumferential direction.

11. A clamp as claimed in at least one of the preceding claims, **characterized in that** on at least one terminal portion of the clamp band (1) there is formed at least one stiffening bead (15, 16) extending in circumferential direction.

12. A clamp as claimed in claim 11, **characterized in that** on at least one terminal portion of the clamp band (1) there are formed at least two stiffening beads (15, 16) extending in circumferential direction and parallel to each other.

13. A clamp as claimed in claim 11 or 12, **characterized in that** the stiffening bead (15, 16) is formed on the inside of the clamp band (1).

14. A clamp as claimed in at least one of claims 11 to 13, **characterized in that** the stiffening bead (15, 16) is embossed into the clamp band (1).

15. A clamp as claimed in at least one of the preceding claims, **characterized in that** the radially outer terminal portion (3) of the clamp band (1) has two bulging portions as extension elements (7, 17), the clamp band (1) comprising between the two bulging portions a centrally arranged slot (18) extending in circumferential direction.

16. A clamp as claimed in claim 15, **characterized in that** the width of the slot (18) is at least as large as the width of the guiding tongue, the guiding bead (14) or the hook (5).

17. A clamp as claimed in at least one of the preceding claims, **characterized in that** the engaging portion for the mounting pliers (9) is arranged on at least one terminal portion of the clamp band (1) on the outside towards each other in circumferential direction.

## Revendications

1. Collier, en particulier pour la fixation d'un tuyau flexible,
- avec une bande de collier (1) qui est arquée à l'état monté en forme d'anneau et qui entoure une section de serrage (2),
- la bande de collier (1) présentant deux sections d'extrémité (3, 4) qui sont placées l'une au-dessus de l'autre radialement à l'état monté et se chevauchent dans la direction périphérique ainsi
- qu'avec un crochet (5) saillant vers l'exterieur et disposé sur la face externe de la section d'extrémité interne radiale (4) de la bande de collier (1), et
- un oeillet (6) ménagé sur la section d'extrémité externe radiale et
- la section d'extrémité externe radiale (3) de la bande de collier (1) présentant un élément de dilatation (7),
**caractérisé en ce que**
- l'élément de dilatation (7) présente la forme d'un bombement et l'oeillet (6), dans lequel peut être accroché le crochet (5) pour relier les deux sections d'extrémité (3, 4) de la bande de collier (1) entre elles, est disposé dans le flanc du bombement qui est tourné vers l'extrémité de la bande de collier (1).

2. Collier selon la revendication 1, **caractérisé en ce que** l'oeillet (6) est découpé à partir de la section d'extrémité externe radiale (3) de la bande de collier (1).

3. Collier selon la revendication 1 ou 2, **caractérisé en ce que** l'oeillet (6) est essentiellement réniforme.

4. Collier selon au moins l'une des revendications précédentes, **caractérisé en ce que** la section d'extrémité radiale externe (3) de la bande de collier (1) est arquée dans la zone de l'oeillet (6) au-delà du contour de la section de serrage (2) afin que la section d'extrémité radiale externe (3) de la bande de collier (1) s'applique au moment du montage de manière élastique sur la section d'extrémité interne radiale (4) de la bande de collier (1).

5. Collier selon la revendication 4, **caractérisé en ce que** la section d'extrémité radiale externe (3) de la bande de collier (1) est arquée en forme de patin pour glisser lors du montage sur la section d'extrémité interne radiale (4) de la bande de collier (1).

6. Collier selon au moins l'une des revendications précédentes, **caractérisé en ce que** le flanc du bombement, détourné de l'extrémité de la bande de collier est plus raide que le flanc du bombement tourné vers l'extrémité de la bande de collier (1) et forme une prise d'engagement pour une pince de montage (9).

7. Collier selon au moins l'une des revendications précédentes, **caractérisé en ce que** la section d'extrémité radiale externe (3) de la bande de collier (1) présente une empreinte étagée dirigée vers l'extérieur (11) qui forme sur la face interne de la bande de collier (1) un évidement (12),
la profondeur de l'évidement (12) étant égale à l'épaisseur de la bande de collier (1) dans la zone de la section d'extrémité interne radiale (4),
tandis que la forme de l'évidement (12) est adaptée à la forme de la section d'extrémité interne radiale (4) de la bande de collier (1).

8. Collier selon la revendication 7, **caractérisé en ce que** les deux sections d'extrémité (3, 4) de la bande de collier (1) fusionnent de manière affleurante à l'état monté.

9. Collier selon la revendication 7 ou 8, **caractérisé en ce que** la section d'extrémité interne radiale (4) de la bande de collier (1) et l'évidement (12) se terminent en forme de languette dans la section d'extrémité radiale externe (3) de la bande de collier (1).

10. Collier selon au moins l'une des revendications 7 à 9, **caractérisé en ce que** sur la face interne de l'empreinte étagée (11), il est moulé en supplément une rainure de guidage (13) ou moulure de guidage s'étendant dans le sens périphérique dans laquelle s'engage un ressort de guidage (14) moulé sur la face externe de la section d'extrémité interne radiale (4) de la bande de collier (1), ressort qui fait saillie vers l'extérieur et qui s'étend également dans le sens périphérique et dont la forme est adaptée de manière correspondante.

11. Collier selon au moins l'une des revendications précédentes, **caractérisé en ce que** sur au moins une section d'extrémité de la bande de collier (1), il est moulé au moins une moulure de raidissement (15, 16) s'étendant dans le sens périphérique.

12. Collier selon la revendication 11, **caractérisé en ce que** sur au moins une section d'extrémité de la bande de collier (1) sont moulées au moins deux moulures de raidissement (15, 16) s'étendant dans le sens périphérique et parallèles entre elles.

13. Collier selon la revendication 11 ou 12, **caractérisé en ce que** la moulure de raidissement (15, 16) est moulée sur la face interne de la bande de collier (1).

14. Collier selon au moins l'une des revendications 11 à 13, **caractérisé en ce que** la moulure de raidissement (15, 16) est gravée dans la bande de collier (1).

15. Collier selon au moins l'une des revendications précédentes, **caractérisé en ce que** la section d'extrémité radiale externe (3) de la bande de collier (1) présente deux bombements en tant qu'élément de dilatation (7, 17), la bande de collier (1) présentant entre les deux bombements une fente (18) qui est disposée au milieu et qui s'étend dans le sens périphérique.

16. Collier selon la revendication 15, **caractérisé en ce que** la largeur de la fente (18) est au moins égale à la largeur du ressort de guidage, de la moulure de guidage (14) ou du crochet (5).

17. Collier selon au moins l'une des revendications précédentes, **caractérisé en ce que** sur la face externe dans le sens périphérique, la zone d'attaque pour une pince de montage (9) est ménagée l'une vers l'autre sur au moins une section d'extrémité de la bande de collier (1).
